# EUROPÄISCHE PATENTSCHRIFT

(11) **EP 1 236 587 B1**
(45) Veröffentlichungstag und Bekanntmachung des Hinweises auf die Patenterteilung: **02.04.2008**
(21) Anmeldenummer: 02004166.1
(22) Anmeldetag: 26.02.2002
(51) Int. Cl.: B60C 11/03, B60C 3/06, B60C 19/00, B60C 11/00

(54) **Fahrzeugluftreifen mit einem asymmetrischen Laufstreifen**
Vehicle tyre with an asymmetric tread
Bandage pneumatique pour véhicule avec une bande de roulement asymétrique

(30) Priorität: 02.03.2001 DE 10110238
(43) Veröffentlichungstag der Anmeldung: 04.09.2002
(73) Patentinhaber: Continental Aktiengesellschaft, 30165 Hannover (DE)
(72) Erfinder: Hindriks, Günter, 49828 Georgsdorf (DE)

(56) Entgegenhaltungen:
- EP-A- 0 572 127
- EP-A- 1 184 205
- DE-A- 19 812 934
- GB-A- 1 255 952
- US-A- 3 853 164
- US-A- 3 916 968
- US-A- 5 622 575
- PATENT ABSTRACTS OF JAPAN vol. 2000, no. 02, 29. Februar 2000 (2000-02-29) & JP 11 321237 A (TOYO TIRE &RUBBER CO LTD), 24. November 1999 (1999-11-24)
- PATENT ABSTRACTS OF JAPAN vol. 017, no. 064 (M-1364), 8. Februar 1993 (1993-02-08) & JP 04 271902 A (TOYO TIRE & RUBBER CO LTD), 28. September 1992 (1992-09-28)

## Beschreibung

Die Erfindung betrifft einen Fahrzeugluftreifen mit einem asymmetrischen Laufstreifen , einer Radialkarkasse, die sich vom Scheitelbereich über zwei Seitenwandteile nach radial innen erstreckt und in Wülsten verankert ist, und einem Gürtel aus wenigstens zwei Cordlagen, welcher zwischen dem Laufstreifen und dem Scheitelbereich der Radialkarkasse eingebettet ist, wobei der Laufstreifen in radialer Richtung aus zwei Gummischichten besteht, nämlich aus einer radial inneren, dem Gürtel zugewandten Base und einer radial äußeren, die Lauffläche umfassenden Cap, wobei Base und Cap aus unterschiedlichen Gummimischungen mit unterschiedlichen Härten bestehen.

Fahrzeugluftreifen sind je nach ihrer Radposition unterschiedlichen Belastungen im Fahrbetriebe ausgesetzt, die sich insbesondere im Bereich des Schulterbereichs des Laufstreifens und der darunterliegenden Schichten äußern. So wird bei Kurvenfahrten der Schulterbereich auf der dem Fahrzeug abgewandten Seite des Fahrzeugluftreifens stärker belastet als auf der Innenseite. Somit ist es insbesondere bei laufrichtungsgebundenen Fahrzeugluftreifen wünschenswert, im Bereich der äußeren Schulterkante eine zusätzliche Verstärkung vorzusehen bzw. die Schulterbereiche durch unterschiedliche Materialzusammensetzungen und/oder durch unterschiedliche Profilgestaltungen den verschiedenen Belastungen anzupassen insbesondere soll die Umfangs- und die Quersteifigkeit des Profils auf der fahrzeugäußeren Seite erhöht werden.

Es sind bereits verschiedene Lösungen vorgeschlagen worden, einen Reifen asymmetrisch aufzubauen und so ist es beispielsweise aus der EP 0 548 735 A1 und der EP 0 600 398 A1 bekannt, den Gürtel asymmetrisch auszugestalten. In der EP 0 686 515 B1 ist vorgeschlagen worden, die Lauffläche asymmetrisch auszugestalten, insofern, als dass dort vorgeschlagen wird, einen fahrzeugäußeren Streifen der Lauffläche aus einem Material herzustellen, der ein vom übrigen Bereich der Lauffläche abweichendes Abriebvolumen aufweist.

Dem Fachmann ist ― z.B. aus der DE 19 17 427 A1 ― geläufig, dass eine hohe Hysteresis in der Regel auf nasser Straße den Vorteil höherer Reibungsbeiwerte hat, aber auch den Rollwiderstand und die Reifenaufheizung erhöht und deshalb nur radial außen angewandt werden sollte, während radial weiter innen elastischere, also hystereseärmere, Mischungen zu bevorzugen sind.

Aus der US-PS 3,286,756 ist ein Fahrzeugluftreifen bekannt, dessen eine, als "erste" bezeichnete Laufflächenschulter aus einem besonders griffigen Gummi und dessen andere als "zweite" bezeichnete Laufflächenschulter aus einem besonders abriebbeständigen Gummi bestehen soll. Diese Schrift offenbart dem Fachmann, dass das Entwicklungsziel eines hohen Widerstandes gegen (Nass-) Rutschen in Konkurrenz steht zu dem anderen Entwicklungsziel eines hohen Widerstandes gegen Abrieb. Gemäß dieser Schrift soll die erste, besonders griffige und wenig abriebbeständige, Gummimischung auf der fahrzeugäußeren Reifenschulter angeordnet werden.

Es sind auch schon Luftreifen mit aus Cap und Base zusammengesetzten Laufflächen bekannt, die asymmetrisch aufgebaut sind, beispielsweise aus der EP 0 106 838 B1, der JP-A 11 321 237, der EP 0 738 616 A1 und der DE 198 12 934 A1. Im letzteren Dokument wird mit Bezug auf die dortige Figur 2 ein asymmetrischer Laufstreifen mit Cap und Base erwähnt, bei welchem die Cap auf der einen Seite so hochgezogen ist, dass die Oberfläche der Cap auf dieser Seite dem Schulterbereich des Laufstreifens und damit den Schulterbereich des Reifens bildet und auch in Kontakt mit der Fahrbahnoberfläche gelangen soll. Dies wird hier dadurch möglich, dass die Gummimischung von Cap und Base jeweils aus einer Laufflächenmischung besteht. Es ist hier also erforderlich, abweichend von der üblichen Materialzusammensetzung auch die Base aus einer relativ teuren, gute Laufeigenschaften aufweisenden Mischung herzustellen.

Aufgabe der Erfindung ist es, einen Fahrzeugluftreifen der eingangs geschilderten Art mit einem Laufstreifen aus Cap und Base zu schaffen, welcher bezüglich der Äquatoriallinie des Reifens zur Erzeugung unterschiedlicher Steifigkeiten und eines unterschiedlichen Abriebverhaltens asymmetrisch aufgebaut ist, wobei der Reifen unter Beibehaltung guter Handlingeigenschaften preiswert herzustellen ist.

Diese Aufgabe wird erfindungsgemäß mit einem Fahrzeugluftreifen gemäß Oberbegriff des Patentanspruchs 1 gelöst, welcher die Merkmale des kennzeichnenden Teils des Patentanspruchs 1 aufweist.

Die Aufgabe wird also durch überraschende Art und Weise dadurch gelöst, dass nicht nur - wie sonst üblich - für Base und Cap unterschiedliche Materialien mit unterschiedlicher Hysteresis verwendet werden, sondern dass hier vor allem auf eine geometrische Asymmetrie abgezielt wird. Zwar soll auch das Material der Base eine geringere Hysteresis aufweisen als die Cap-Mischung. Jedoch kann bei der erfindungsgemäßen Lösung ein übliches, relativ preiswertes Base-Material gewählt werden, anders als beispielsweise in der bereits erwähnten DE 198 12 934 A1, wo auch die Cap wenigstens teilweise aus einer Laufflächenmischung bestehen muss, da dort ja die Cap den Schulterbereich bildet und gerade in diesem kritischen Bereich Kontakt zur Fahrbahnoberfläche hat.

Dies soll erfindungsgemäß aber möglichst verhindert werden, und zwar in jedem Altersstadium des Reifens, d.h. auch bis zur Abnutzungsgrenze. Die Cap soll also bezüglich der Dicke so ausgelegt werden, dass auch bei stärkstem Abrieb des Laufflächenmaterials die Cap nicht freigelegt und in Kontakt mit der Fahrbahnoberfläche gelangen kann. Zudem kann durch den erfindugsgemäßen Aufbau des Laufstreifens der Zielkonflikt zwischen möglichst hoher Quer- und Umfangssteifigkeit des Profils auf der fahrzeugäußeren Seite des Fahrzeugluftreifens einerseits und möglichst einfacher und preiswerter Herstellung des Laufstreifens andererseits zumindest entschärft werden, da beim erfindungsgemäßen Aufbau des Laufstreifens dessen Base nicht direkten Abriebsverlusten unterliegt und somit das Material an auftretende bzw. angreifende Abriebskräfte angepaßt werden muß.

Anders formuliert werden die Bereiche, die besonders gute Eigenschaften bezüglich Querund Umfangssteifigkeit aufweisen sollen, in das Innere des Laufstreifens verlegt wobei die durch die Äquatorialline getrennte Hälfte, in der die Cap dicker ist als in der anderen Hälfte, die fahrzeugäußere Hälfte des Reifens. Wenn ― wie üblich ― die Base-Mischung härter ist als die der Cap, ist gleichzeitig die Reifenhälfte mit dem höheren Cap-Anteil härter als die andere Hälfte, wodurch dann die Lauffläche in diesem Bereich insgesamt härter ist und damit eine höhere Quer- und Umfangsteifigkeit aufweist.

In einer praktischen Ausgestaltung der Erfindung ist vorgesehen, dass eine Schichtgrenze zwischen Cap und Base im Querschnitt des Reifens eine Linie ist, welche einen Winkel α größer Null aufweist. Während also die mit der Karkasse zu verbindende Unterseite der Base wie die Oberseite der Cap nach dem Extrudieren des Laufstreifens einen im Wesentlichen geraden Verlauf haben, weist die Schichtgrenze bzw. die Trennlinie zwischen Base und Cap eine Steigung auf, so dass die Dicke der Base von einer unteren zur gegenüberliegenden oberen Seitenkante mehr oder weniger stetig zunimmt.

In einer weiteren vorteilhaften Ausgestaltung der Erfindung kann vorgesehen werden, dass die Base eine Mulde aufweist, welche mit der Cap aufgefüllt ist, wobei weiter vorgesehen sein kann, dass die Äquatoriallinie der Mulde zur Äquatoriallinie des Reifens versetzt ist.

In einer alternativen Ausgestaltung kann vorgesehen sein, dass die Base im Bereich der ersten Hälfte des Reifens mit einer das Dickenniveau erhöhenden Schulter versehen ist.

In weiteren zweckmäßigen Ausgestaltungen der Erfindung ist vorgesehen, zur Erzielung einer höheren Umfangs- und Quersteifigkeit des Profils auf der fahrzeugäußeren Seite Asymmetrien auch im Unterbau des Reifens zu schaffen, insbesondere kann vorgesehen sein, dass eine mit einer Seitenwand verbundene Wulst zur Befestigung des Reifens an einer Felge steifer ist als eine Wulst der anderen Seitenwand; es kann weiter alternativ oder kumulativ vorgesehen sein, dass der Laufstreifen in der ersten Hälfte steifere Profilklötze aufweist als in der zweiten Hälfte, wobei weiter vorgesehen sein kann, dass der Laufstreifen in der ersten Hälfte mehr Profil positiv aufweist als in der zweiten Hälfte. Des Weiteren kann vorgesehen sein, dass der Zenit des Reifens zur fahrzeugäußeren Seite hin verschoben ist, wobei auch der Querkrümmungsradius an der fahrzeugäußeren Seite des Reifens kleiner ist als an der fahrzeuginneren Seite.

Weitere Vorteile und Ausgestaltung der Erfindung werden anhand des Ausführungsbeispiels anhand der Zeichnung näher erläutert. In der Zeichnung zeigen:
- Fig. 1: ein erstes Ausführungsbeispiel eines erfindungsgemäßen Fahrzeugluftreifens im Querschnitt,
- Fig. 2: einen Laufstreifen eines erfindungsgemäßen Fahrzeugluftreifens im Querschnitt, und
- Fig. 3: einen Laufstreifen eines dritten Ausführungsbeispiels eines erfindungsgemäßen Fahrzeugluftreifens im Querschnitt.

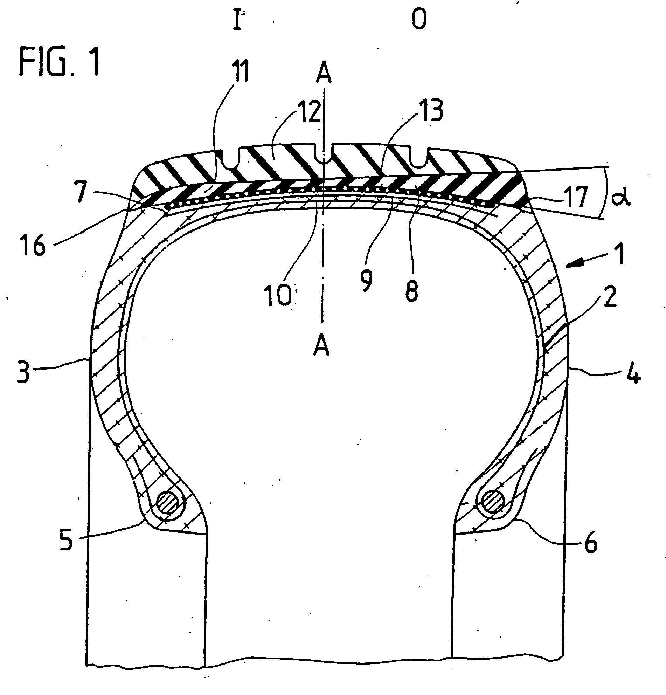

In Figur 1 ist ein erstes Ausführungsbeispiel eines erfindungsgemäßen Fahrzeugluftreifens 1 im Querschnitt dargestellt. Dieser hat weitgehend einen herkömmlichen Aufbau mit einer Radialkarkasse 2, zwei Seitenwandteilen 3 und 4 und an ihnen angeformten Wülsten 5 und 6 zur Montage an einer nicht dargestellten Fahrzeugfelge. Ein nur schematisch dargestellter Gürtel 7 ist zwischen Radialkarkasse 2 und einem Laufstreifen 8 angeordnet. Dieser Gürtel 7 besteht üblicherweise aus zwei im Kreuzverband angeordneten Cordlagen 9 und 10.

Der Laufstreifen 8 besteht aus einer Base 11 und Cap 12.

Durch die gedachte Äquatoriallinie A - A lässt sich der Reifenquerschnitt in den Figuren rechts dargestellte erste Hälfte O und in eine in den Figuren links dargestellte zweite Hälfte I unterteilen, wobei die erste Hälfte O im Fahrbetrieb die fahrzeugäußere Seite des Reifens darstellt.

Wie in den Figuren zu erkennen, ist die Base 11 im Verhältnis zur Cap 12 in der ersten Hälfte O dicker und weist ein höheres Volumen auf als in der zweiten Hälfte I.

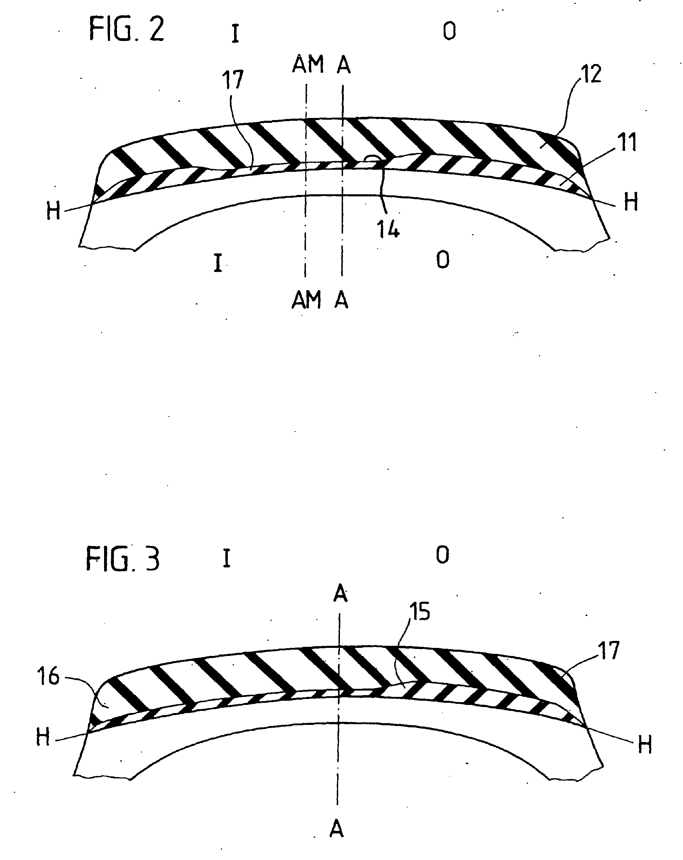

Eine Schichtgrenze 13 zwischen Base 11 und Cap 12 weist einen Winkel α größer Null zu einer Linie H - H auf, welche in den Figuren 2 und 3 dargestellt ist. Diese Linie H - H weist wie in den Figuren dargestellt eine Krümmung auf; sie ist aber nach dem Extrudieren des Laufstreifens, also vor dem Zusammenfügen des Laufstreifens 8 mit der Radialkarkasse 2 im wesentlichen gerade und horizontal. In Bezug auf diese Horizontale muß der Winkel α verstanden werden.

In Figur 2 ist schematisch im Querschnitt ein Laufstreifen 8 eines zweiten Ausführungsbeispiels eines erfindungsgemäßen Fahrzeugluftreifens 1 dargestellt. Auch hier ist der Volumenanteil der Base 11 in der ersten Hälfte O größer als in der zweiten Hälfte I des Laufstreifens 8. Die Base 11 nach Figur 2 weist eine Mulde 14 auf, welche mit der Cap 12 vollständig verfüllt ist. Die in Figur 2 angedeutete Symmetrielinie AM - AM der Mulde ist zur Äquatoriallinie A - A versetzt, wodurch auch hier die Base 11 in der ersten Hälfte O dicker ist als in der zweiten Hälfte I.

In Figur 3 ist ein Laufstreifen 8 eines dritten Ausführungsbeispiels eines erfindungsgemäßen Fahrzeugluftreifens 1 dargestellt. Bei diesem weist die Cap 12 in der ersten Hälfte O des Laufstreifens 8 eine Schulter 15 auf, durch welche das Dickenniveau der Base 11 im Bereich der ersten Hälfte O erhöht wird. Auch bei diesem Ausführungsbeispiel besteht also eine geometrische Asymmetrie zwischen Cap 12 und Base 11, wobei die Cap 12 die Base 11 bis zu Seitenkanten 16, 17 abdeckt, und zwar in einer Stärke, die gewährleistet, dass die Base 11 auch bei Erreichen des Lebensalters des Fahrzeugluftreifens 1 überdeckt bleibt.

### Bezugszeichenliste (ist Teil der Beschreibung)

- 1: Fahrzeugluftreifen
- 2: Radialkarkasse
- 3: Seitenwandteil
- 4: Seitenwandteil
- 5: Wulst
- 6: Wulst
- 7: Gürtel
- 8: Laufstreifen
- 9: Cordlage
- 10: Cordlage
- 11: Base
- 12: Cap
- 13: Schichtgrenze
- 14: Mulde
- 15: Schulter
- 16: Seitenkante
- 17: Seitenkante
- A - A: Äquatoriallinie
- O: erste Hälfte
- I: zweite Hälfte
- H - H: Horizontallinie
- AM - AM: Symmetrielinie der Mulde

## Patentansprüche

1. Fahrzeugluftreifen (1) mit einem asymmetrischen Laufstreifen (8), einer Radialkarkasse (2), die sich vom Scheitelbereich über zwei Seitenwandteile (3, 4) nach radial innen erstreckt und in Wülsten (5, 6) verankert ist, und einem Gürtel (7) aus wenigstens zwei Cordlagen (9, 10), welcher zwischen dem Laufstreien (8) und dem Scheitelbereich der Radialkarkasse (2) eingebettet ist, wobei der Laufstreifen (8) in radialer Richtung aus zwei Gummischichten besteht, nämlich aus einer radial inneren, dem Gürtel (7) zugewandten Base (11) und einer radial äußeren, die Lauffläche umfassenden Cap (12), wobei Base (11) und Cap (12) aus unterschiedlichen Gummimischungen mit unterschiedlichen Härten bestehen, und wobei der Laufstreifen (8) wenigstens in Querrichtung durch ein unterschiedliches Anteilverhältnis von Base: Cap asymmetrisch aufgebaut ist, dergestalt, dass in der ersten Hälfte (O) des Reifens (1), welche durch die Äquatoriallinie (A - A) des Reifens (1) von der zweiten Hälfte (I) des Reifens (1) getrennt ist, der Volumenanteil der Base (11) gegenüber der Cap (12) am Laufstreifen (8) größer ist als in der zweiten Hälfte (I) des Reifens (1), und wobei die erste Hälfte (O) des Reifens (1) die fahrzeugäußere Seite des Reifens bildet
**dadurch gekennzeichnet, dass**
die Cap (12) in zwei Bereiche unterschiedlicher Materialzusammensetzung geteilt ist, wobei ein erster Bereich, welcher 20 bis 50 % der Cap (12) ausmacht, eine Silica-Gummimischung ist, während der andere Bereich aus einer Ruß-Gummimischung besteht und, dass die Base (11) von der Cap (12) über die gesamte Breite des Laufstreifens (8) wenigstens bis zu den Seitenkanten (16, 17) des Laufstreifens (8) abgedeckt ist.

2. Fahrzeugluftreifen nach Anspruch 1, **dadurch gekennzeichnet, dass** eine Schichtgrenze (13) zwischen Cap (12) und Base (11) im Querschnitt des Reifens (1) eine Linie ist, welche einen Winkel α größer Null zu einer Linie (H-H) einnimmt.

3. Fahrzeugreifen nach wenigstens einem der Ansprüche 1 bis 2, **dadurch gekennzeichnet, dass** die Base (11) eine Mulde (14) aufweist, elche mit der Cap (12) aufgefült ist.

4. Fahrzeugluftreifen nach Anspruch 3, **dadurch gekennzeichnet, dass** eine Symmetrielinie (AM - AM) der Mulde (14) zur Äquatoriallinie (A - A) des Reifens (1) versetzt ist.

5. Fahrzeugluftreifen nach wenigstens einem der Ansprüche 1 bis 4, **dadurch gekennzeichnet, dass** die Base (11) im Bereich der ersten Hälfte (O) mit einer das Dickenniveau der Base (11) erhöhenden Schulter (15) versehen ist.

6. Fahrzeugluftreifen nach wenigstens einem der Ansprüche 1 bis 5, **dadurch gekennzeichnet, dass** eine mit einer Seitenwand (3, 4) verbundene Wulst (5, 6) zur Befestigung des Reifens (1) an einer Felge steifer ist als eine Wulst (5) der anderen Seitenwand (3).

7. Fahrzeugluftreifen nach wenigstens einem der Ansprüche 1 bis 6, **dadurch gekennzeichnet, dass** der Laufstreifen (8) in der ersten Hälfte (O) steifere Profilklötze aufweist als in er zweiten Hälfte (I).

8. Fahrzeugluftreifen nach wenigstens einem der Ansprüche 1 bis 7, **dadurch gekennzeichnet, dass** der Laufsteifen (8) in der ersten Hälfte (O) mehr Profilpositiv aufweist als in der zweiten Hälfte (I).

9. Fahrzeugluftreifen nach wenigstens einem der Ansprüche 1 bis 8, **dadurch gekennzeichnet, dass** der Zenit des Reifens (1) zur fahrzeugäußeren Seite hin verschoben ist.

10. Fahrzeugluftreifen nach wenigstens einem der Ansprüche 1 bis 9, **dadurch gekennzeichnet, dass** der Querkrümmungsradius an der fahrzeugäußeren Seie des Reifens kleiner ist als an der fahrzeuginneren Seite.

## Claims

1. Pneumatic vehicle tyre (1) with an asymmetric tread rubber (8), a radial ply casing (2), which extends from the apex region over two sidewall parts (3, 4) radially inwards and is anchored in beads (5, 6), and a breaker belt (7) comprising at least two layers of cord fabric (9, 10), which is embedded between the tread rubber (8) and the apex region of the radial ply casing (2), the tread rubber (8) comprising in the radial direction two layers of rubber, to be specific a radially inner base (11), facing the breaker belt (7), and a radially outer cap (12), enclosing the tread, the base (11) and the cap (12) consisting of different rubber mixtures with different hardnesses, and the tread rubber (8) being formed asymmetrically at least in the transverse direction by a differing proportionate base:cap ratio in such a way that, in the first half (O) of the tyre (1), which is separated from the second half (1) of the tyre (1) by the equatorial line (A - A) of the tyre (1), the volumetric proportion of the base (11) in relation to the cap (12) on the tread rubber (8) is greater than in the second half (I) of the tyre (1), and the first half (O) of the tyre (1) forming the outer side of the tyre in relation to the vehicle, **characterized in that** the cap (12) is divided into two regions of different material compositions, a first region, which makes up 20 to 50% of the cap (12), being a silica/rubber mixture, while the other region consists of a carbon black/rubber mixture, and **in that** the base (11) is covered by the cap (12) over the entire width of the tread rubber (8), at least up to the side edges (16, 17) of the tread rubber (8).

2. Pneumatic vehicle tyre according to Claim 1, **characterized in that** a layer boundary (13) between the cap (12) and the base (11) in the cross section of the tyre (1) is a line which forms an angle α greater than zero in relation to a line (H - H).

3. Pneumatic vehicle tyre according to at least either one of Claims 1 and 2, **characterized in that** the base (11) has a recess (14), which is filled with the cap (12).

4. Pneumatic vehicle tyre according to Claim 3, **characterized in that** a line of symmetry (AM - AM) of the recess (14) is offset in relation to the equatorial line (A - A) of the tyre (1).

5. Pneumatic vehicle tyre according to at least one of Claims 1 to 4, **characterized in that** the base (11) is provided in the region of the first half (O) with a shoulder (15) that increases the thickness level of the base (11).

6. Pneumatic vehicle tyre according to at least one of Claims 1 to 5, **characterized in that** a bead (5, 6) connected to one sidewall (3, 4) and intended for fixing the tyre (1) to a rim is stiffer than a bead (5) of the other sidewall (3).

7. Pneumatic vehicle tyre according to at least one of Claims 1 to 6, **characterized in that** the tread rubber (8) has stiffer profile blocks in the first half (O) than in the second half (I).

8. Pneumatic vehicle tyre according to at least one of Claims 1 to 7, **characterized in that** the tread rubber (8) has more profile positives in the first half (0) than in the second half (I).

9. Pneumatic vehicle tyre according to at least one of Claims 1 to 8, **characterized in that** the zenith of the tyre (1) is displaced towards the outer side in relation to the vehicle.

10. Pneumatic vehicle tyre according to at least one of Claims 1 to 9, **characterized in that** the radius of transverse curvature on the outer side of the tyre in relation to the vehicle is smaller than on the inner side in relation to the vehicle.

## Revendications

1. Bandage pneumatique (1) pour véhicule qui présente une bande de roulement (8) asymétrique, une carcasse radiale (2) qui s'étend radialement vers l'intérieur partant de la zone du sommet et en passant par deux parties (3, 4) de paroi latérale et qui est ancrée dans des bourrelets (5, 6), et une ceinture (7) constituée d'au moins deux couches (9, 10) de câble et incorporée entre la bande de roulement (8) et la zone du sommet de la carcasse radiale (2), la bande de roulement (8) étant constituée dans la direction radiale de deux couches de caoutchouc, à savoir une couche radialement intérieure qui forme une base (11) tournée vers la ceinture (7) et un chapeau radialement extérieur (12) qui comprend la surface de roulement, la base (11) et le chapeau (12) étant constitués de mélanges de caoutchouc différents qui ont des duretés différentes, la bande de roulement (8) étant asymétrique dans la direction transversale du fait de proportions différentes entre la base et chapeau de telle sorte que dans la première moitié (O) du bandage (1) séparée de la deuxième moitié (I) du bandage (1) par la ligne équatoriale (A - A) du bandage (1), le rapport volumique entre la base (11) et le chapeau (12) sur la bande de roulement (8) est plus grand que dans la deuxième moitié (I) du bandage (1), la première moitié (O) du bandage (1) formant le côté du bandage situé à l'extérieur du véhicule,
**caractérisé en ce que**
le chapeau (12) est divisé en deux zones de matériaux de compositions différentes, une première zone qui constitue de 20 à 50 % du chapeau (12) étant un mélange de caoutchouc à la silice tandis que l'autre zone est constituée d'un mélange de caoutchouc au noir de carbone, et **en ce que** la base (11) est recouverte par le chapeau (12) sur toute la largeur de la bande de roulement (8), au moins jusqu'aux bords latéraux (16, 17) de la bande de roulement (8).

2. Bandage pneumatique pour véhicule selon la revendication 1, **caractérisé en ce que** la frontière (13) entre les couches du chapeau (12) et de la base (11) forme dans une coupe transversale du bandage (1) une ligne qui forme un angle α plus grand que zéro avec une ligne (H - H).

3. Bandage pneumatique pour véhicule selon au moins l'une des revendications 1 à 2, **caractérisé en ce que** la base (11) présente une moulure (14) qui est remplie du chapeau (12).

4. Bandage pneumatique pour véhicule selon la revendication 3, **caractérisé en ce qu'**une ligne de symétrie (AM-AM) de la moulure (14) est décalée par rapport à la ligne équatoriale (A - A) du bandage (1).

5. Bandage pneumatique pour véhicule selon au moins l'une des revendications 1 à 4, **caractérisé en ce que** dans la zone de la première moitié (O), la base (11) est dotée d'un épaulement (15) qui augmente le niveau d'épaisseur de la base (11).

6. Bandage pneumatique pour véhicule selon au moins l'une des revendications 1 à 5, **caractérisé en ce qu'**un bourrelet (5, 6) relié à une paroi latérale (3, 4) pour la fixation du bandage (1) sur une jante est plus rigide qu'un bourrelet (5) de l'autre paroi latérale (3) .

7. Bandage pneumatique pour véhicule selon au moins l'une des revendications 1 à 6, **caractérisé en ce que** dans la première moitié (O), la bande de roulement (8) présente des blocs profilés plus rigides que dans la deuxième moitié (I).

8. Bandage pneumatique pour véhicule selon au moins l'une des revendications 1 à 7, **caractérisé en ce que** dans la première moitié (O), la bande de roulement (8) présente un profil plus accusé que dans la deuxième moitié (I).

9. Bandage pneumatique pour véhicule selon au moins l'une des revendications 1 à 8, **caractérisé en ce que** le zénith du bandage (1) est déplacé vers le côté extérieur du véhicule.

10. Bandage pneumatique pour véhicule selon au moins l'une des revendications 1 à 9, **caractérisé en ce que** sur le côté extérieur du véhicule, le rayon de courbure transversale du bandage est plus petit que sur le côté intérieur du véhicule.
